# EUROPÄISCHE PATENTSCHRIFT

(11) **EP 0 965 088 B1**
(45) Veröffentlichungstag und Bekanntmachung des Hinweises auf die Patenterteilung: **25.07.2007**
(21) Anmeldenummer: 98921350.9
(22) Anmeldetag: 10.03.1998
(51) Int. Cl.: G06F 17/00

(54) **SICHERE IDENTIFIKATION MIT VORAUSWAHL UND RÜCKWEISUNGSKLASSE**
RELIABLE IDENTIFICATION WITH PRESELECTION AND REJECTION CLASS
IDENTIFICATION SURE AVEC PRESELECTION ET CLASSE DE REBUTS

(30) Priorität: 10.03.1997 DE 19709819; 17.10.1997 DE 19746077
(43) Veröffentlichungstag der Anmeldung: 22.12.1999
(73) Patentinhaber: Fraunhofer-Gesellschaft zur Förderung der angewandten Forschung e.V., 80686 München (DE)
(72) Erfinder: PLANKENSTEINER, Peter, D-91052 Erlangen (DE); DIECKMANN, Ulrich, D-91096 Möhrendorf (DE)
(74) Vertreter: Leonhard, Frank Reimund
(86) Internationale Anmeldenummer: PCT/DE1998/000708
(87) Internationale Veröffentlichungsnummer: WO 1998/040825

(56) Entgegenhaltungen:
- SCHURMANN J: "Zur Zurückweisung zweifelhafter Zeichen" NACHRICHTENTECHNISCHE ZEITSCHRIFT, MARCH 1973, WEST GERMANY, Bd. 26, Nr. 3, Seiten 137-144, XP002081339 ISSN 0027-707X
- SCHWERDTMANN W: "REDUKTION DES KLASSIFIKATIONSFEHLERS DURCH ANGEPASSTE MUSTERENTWICKLUNG" NTZ NACHRICHTENTECHNISCHE ZEITSCHRIFT, Bd. 27, Nr. 6, 1974, Seiten 233-238, XP002067426
- FUJIMOTO Y ET AL: "Recognition of handprinted characters by nonlinear elastic matching" 3RD INTERNATIONAL JOINT CONFERENCE ON PATTERN RECOGNITION, CORONADO, CA, USA, 8-11 NOV. 1976, Seiten 113-118, XP002081340 1976, New York, NY, USA, IEEE, USA
- FLEMING M K ET AL: "CATEGORIZATION OF FACES USING UNSUPERVISED FEATURE EXTRACTION" INTERNATIONAL JOINT CONFERENCE ON NEURAL NETWORKS (IJCNN), SAN DIEGO, JUNE 17 - 21, 1990, Bd. 2, 17. Juni 1990, Seiten 65-70, XP000144325 INSTITUTE OF ELECTRICAL AND ELECTRONICS ENGINEERS
- WAGNER T ET AL: "SENSOR-FUSION FOR ROBUST IDENTIFICATION OF PERSONS: A FIELD TEST" PROCEEDINGS OF THE INTERNATIONAL CONFERENCE ON IMAGE PROCESSING (ICIP), WASHINGTON, OCT. 23 - 26, 1995, Bd. 3, 23. Oktober 1995, Seiten 516-519, XP000623197 INSTITUTE OF ELECTRICAL AND ELECTRONICS ENGINEERS
- DIECKMANN U ET AL: "SESAM: a biometric person identification system using sensor fusion" AUDIO- AND VIDEO-BASED BIOMETRIC PERSON AUTHENTICATION. FIRST INTERNATIONAL CONFERENCE, AVBPA'97. PROCEEDINGS, PROCEEDINGS OF FIRST INTERNATIONAL CONFERENCE ON AUDI AND VIDEO BASED BIOMETRIC PERSON AUTHENTICATION (AVBPA), CRANS-MONTANA, SWITZERLAND, , Seiten 301-310, XP002081341 ISBN 3-540-62660-3, 1997, Berlin, Germany, Springer-Verlag, Germany

## Beschreibung

Die Erfindung betrifft ein Verfahren zum Klassifizieren von Mustern, wie Objekten oder Personen, in Klassen, bei welchem Verfahren der Informationsgehalt eines zu klassifizierenden Musters in Informationsbereiche eingeteilt wird. Die Erfindung betrifft auch eine Vorrichtung zur Durchführung des Verfahrens, wobei das in der Vorrichtung vorgesehene Rechenwerk so programmiert ist, das Verfahren auszuführen.

Die Klassifikation von Datensätzen (z.B. Bilddaten, Sprachsignal) ist Grundlage einer "intelligenten" Computerleistung. Die Anwendungsgebiete sind zahlreich, z.B. industrielle Fertigung, biometrische Personenerkennung, medizinische Bildverarbeitung, etc.

Der Stand der Technik umfaßt zahlreiche Klassifikatoren, z.B.
- Statistische Klassifikatoren (Normalverteilungsklassifikatoren)
- Neuronale Netze
- Synergetische Algorithmen
- Nächster-Nachbar-Klassifikator

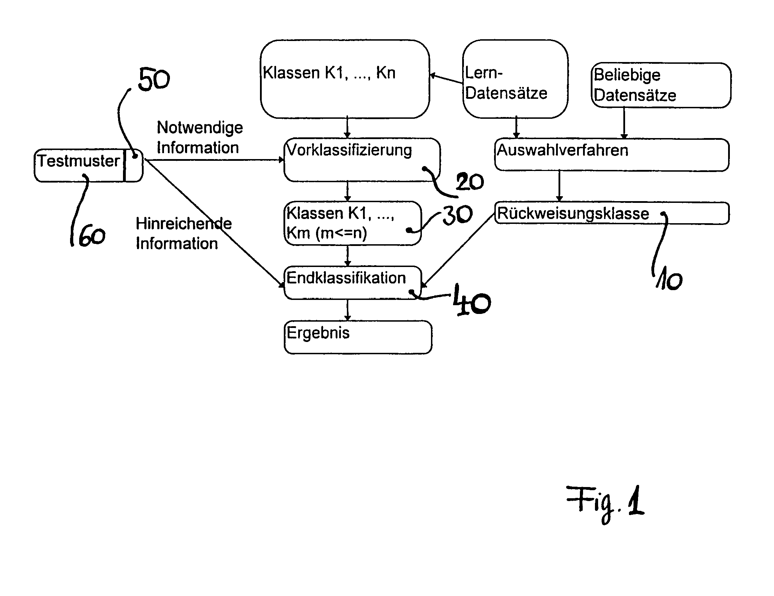

Eine Standardliteratur in der Mustererkennung ist Niemann, "Klassifikation von Mustern", Springer Verlag, 1983. Weitere Schriften beschreiben ebenfalls Klassifikationsverfahren, so Jürgen Schürmann, "Zur Zurückweisung zweifelhafter Zeichen", Nachrichtentechnische Zeitschrift, NTZ, März 1973, Heft 3, Seiten 137 bis 144. Darin beschrieben ist eine Klassifikation, bei welcher ein Zeichen zurückgewiesen werden darf, wenn es - im Sinne eines dort näher zu definierenden Plausibilitätskriteriums - nur mit unzureichender Sicherheit einer von K Klassen zugeordnet werden kann. Ausgegangen wird von einer Zurückweisungsschwelle R, mit der die Zurückweisungsrate und die Fehlerrate beeinflußt werden. Statt eines ursprünglich gegebenen K-Klassen Klassifizierungsproblems wird ein Zweiklassen-Unterscheidungsproblem verwendet, welches in der dortigen Figur 2 veranschaulicht ist. Ein Schätzvektor "d" beeinflußt einen Vektor von Prüfdaten "p", enthält aber keine abweichende Information. Vielmehr soll ein Vektor "v" einer Klasse "k" zugeordnet werden, wobei k = 0, 1, 2, ... K. Der Schätzvektor "d" hat dabei sowohl notwendige, wie auch hinreichernde Informationen, um in die Zielklasse k eingeordnet zu werden. Eine Veränderung der zugänglichen Klassen für diese Zuordnung in einem Zweiklassen-Klassifikator findet nicht statt. In einer anderen Schrift von Werner Schwerdtmann, "Reduktion des Klassifikationsfehlers durch angepaßte Musterentwicklung", NTZ, Heft 6, 1974, Seiten 233 bis 238, werden Klassen aufgrund einer Verwechselungsmatrix, d.h. einer A-posteriori Betrachtung der Klassifikationsgüte zusammengefaßt und eine nachfolgende Klassifikation als Fehlerkorrektur durchgeführt, vgl. dazu das dortige Bild 4 mit der zugehörigen Figur 5. Die angepaßte Reihenentwicklung läßt sich gemäß der dortigen Beschreibung dazu ausnutzen, den Klassifizierungsfehler eines Erkennungssystems zu reduzieren. In zwei Beispielen der dortigen Figuren 6 und 7 werden dem allgemeinen Klassifikator (mit dort genannten 10 Klassen) eine oder mehrere Korrekturstufen nach dem Modell "mehrere Alternativen" oder "eine Alternative" nachgeordnet. Häufig verwechselte Klassen können korrigiert werden und dadurch der Einfluß auf den Klassifikationsfehler des Gesamtsystems herabgesetzt werden.

Die Erfindung geht **von der Aufgabe aus**, die Güte der Klassifikation weiter zu verbessern, sei es durch neue Klassifikatoren oder durch neue prinzipielle Ansätze des Klassifikationsansatzes. Gelöst wird die Aufgabe mit Anspruch 1 oder 10.

Erläuterungen sollen das Verständnis der in den Ansprüchen gewählten technischen Begriffe stützen.

Identifikation (oder Klassifikation) von n Klassen:
Nachdem aus einer vorgegebenen repräsentativen Stichprobe in einem sog. Einlemprozeß n Klassen gebildet wurden, heißt die Einordnung eines (noch) unbekannten Musters in eine bestimmte Klasse 'Identifikation'. Dabei kann durch Einführen einer Rückweisungsschwelle das Muster als unbekannt abgewiesen werden. Wenn es der Rückweisungsklasse näher ist, als den eingelemten oder bekannten Zielklassen der Identifikation, wird es dorthin klassifiziert. Rückweisungsschwelle und -klasse können alternativ und kumulativ vorgesehen werden. Ein "zurückgewiesenes Muster" (Objekt oder Person) liegt vor, wenn alle jeweils vorgesehenen "Rückweisungen" (Schwelle oder/und Klasse) angesprochen haben. Eine erfolgreiche 'Identifikation' setzt voraus, daß aus dem Testmuster *hinreichende* Information für eine eindeutige Zuordnung in eine der n Klassen des Einlemprozesses gewonnen werden kann.

Verifikation:
Durch ein A-Priori-Wissen über die Soll-Klasse wird eine Identifikation mit n=1 durchgeführt, d.h. es kann nach Art einer Binär-Entscheidung (nur) zu einer Akzeptanz oder Rückweisung des Testmusters kommen (Mustern im Test, kurz: "Testmuster").

FAR, FRR, Gütefunktion:
Die FAR (false acception rate) gibt die Quote von *falsch erkannten* Mustern wieder; die FRR (false rejection rate) die Quote von *falsch zurückgewiesenen* Mustern. Eine Gütefunktion G=G(FAR,FRR) gibt die Güte eines Klassifikationsverfahrens an, z.B. G=1-FAR-FRR. Je genauer die Klassifikation, desto näher ist G an "Eins". Eine Gewichtung der FAR und FRR kann Einfluß nehmen, wenn der eine oder andere der Parameter FAR, FRR betont werden soll, beispielsweise durch eine Mittelwertbildung mit Gewichtungsfaktoren g₁,g₂, z. B. (g₁°FAR+g₂°FRR)/(g₁+g₂). In der praktischen Anwendung wird eher FRR von größerer Bedeutung sein, so daß z. B. g₂=2 und g₁=1 gewählt werden können, um die Güte G "meßbar" zu machen und Identifikationen vergleichen zu können.

Das erfindungsgemäße Verfahren dient der Erhöhung der Klassifikationsgüte.
(a) In einem ersten Schritt erfolgt eine 'Identifikation' von n Klassen, die durch eine doppelte Ausnutzung der gegebenen Informationen besser gelöst wird. Dazu wird der Informationsgehalt des Testmusters in einen *notwendigen* und einen *hinreichenden* Teil für die Zugehörigkeit zu einer Klasse eingeteilt. Durch den notwendigen Teil kann eine Vorauswahl (Vorklassifizierung) der in Betracht kommenden Klassen vorgenommen werden. Es wird hierbei keine eindeutige (vielmehr eine unscharfe) Klassifikation geliefert, jedoch die Zahl der tatsächlich für das Muster in Frage kommenden Klassen stark eingeschränkt. Durch diesen Schritt kann die Identifikation "besser" (im Sinne der obigen Gütefunktion G) gelöst werden.
(b) In einem zweiten Schritt wird die Klassifikationsgüte durch eine (zusätzliche) Rückweisungsklasse erhöht. Diese Klasse dient zur Unterstützung der Rückweisung, d.h. zusätzlich zu Rückweisungen, die z.B. durch Schwellenentscheidungen gewonnen wurden, ist eine spezielle Rückweisungsklasse 'gleichberechtigt' zu den ldentifikationsklassen (die konkreten Zielklassen), in die klassifiziert werden kann. Mit der Rückweisungsklasse wird ein A-Priori-Wissen über die Objekte/Personen (allgemein: Muster), die abgewiesen werden sollen, dahingehend berücksichtigt, daß z.B. ein repräsentativer Querschnitt der abzuweisenden "Muster" in diese Rückweisungsklasse eingelernt wird und dem Klassifikator damit bekannt ist.

Die Zusammensetzung der Rückweisungsklasse ist "erfolgsorientiert", d.h. das Klassifikationsproblem muß durch die Nutzung der Rückweisungsklasse besser (im Sinne der Gütefunktion) gelöst werden. Sind abzuweisende Muster z.B. bekannt, so können sie alle in die Rückweisungsklasse eingelernt werden. In der Regel ist aber nur ein bestimmter Teil davon für eine bessere Rückweisungsklasse notwendig, ein anderer Teil kann z.B. aus einer völlig problemfremden Datenbank stammen.

Als Methode zur Auswahl der Rückweisungsmuster kommen Auswahlverfahren in Betracht, z.B. Erproben aller Möglichkeiten und Verwendung derjenigen Datensätze (von Mustern), die zu dem besten Ergebnis führen.

Die Erfindung(en) werden nachfolgend anhand mehrerer Ausführungsbeispiele erläutert und ergänzt.
- **Figur 1**: ist ein graphisches Beispiel einer Klassifikation mit einer Rückweisungsklasse.

Ein konkreter Lern- und Klassifikationsvorgang erfolgt in folgenden Schritten:
Bereitstellung der digitalen Datensätze eines Klassifikationsproblems.
Bestimmung der ldentifikationsklassen K1, ..., Kn durch eine repräsentative Stichprobe der jeweiligen Klasse (übliches Lernverfahren).
Für jede Teilmenge von {K1, ..., Kn} wird eine Rückweisungsklasse bestimmt, die die Gesamtheit aller möglichen Testmuster von dieser Teilmenge abgrenzt. Es können dazu z.B. die Datensätze der anderen Klassen und/oder potentielle Rückweisungskandidaten verwendet werden.
Berechnung des notwendigen Informationsgehalts. Das können durchaus verschiedene Merkmale sein, die allerdings - damit es sinnvoll ist - zu einer Einschränkung in der Klassenauswahl 20 verwendet werden können.
Durch Berücksichtigung der notwendigen Bedingung wird die Identifikation von n Klassen auf eine Klassifikation 30 geringeren Grades m (im besten Fall m=1) zurückgeführt.
Der zweite Schritt beinhaltet die Identifikation/Verifikation 40, die zusätzlich mit der Rückweisungsklasse 10 durchgeführt wird.
Erfolgt die Zuordnung in eine der m Klassen K1 ... Km, gilt das Objekt bzw. die Person als entsprechend erkannt, erfolgt die Zuordnung in die Rückweisungsklasse 10 bzw. ist eine Rückweisungsschwelle überschritten, wird das Objekt bzw. die Person abgewiesen.

Ein sehr treffendes Beispiel des ersten Schrittes läßt sich anhand des Unterschieds von Spracherkennung und Sprecher-Erkennung erläutern:
Spracherkennung:
   Ein gesprochenes Wort wird - möglichst unabhängig von dem spezifischen Sprecher - mit Methoden der Signalverarbeitung erkannt.
Sprecher-Erkennung:
   Die Aufnahme eines Sprachsignals wird - möglichst unabhängig vom Inhalt - einem Sprecher zugeordnet.

Das angestrebte Ziel soll eine zuverlässige **Sprecher**-Erkennung sein, die z.B. zur Zutritts- oder Zugangskontrolle dient.

Im Beispiel 1 müssen die Sprecher für die Identifikation ihren Nachnamen aussprechen. Eine **notwendige** Voraussetzung, daß z.B. Herr Maier als derjenige auch erkannt wird, liegt darin, daß der Name "Maier" ausgesprochen wurde. Durch eine Spracherkennung kommen nur die Klassen in Betracht, die phonetisch wie "Maier" klingen. In diesem Beispiel ist keine Reduzierung auf n=1 vorgesehen, da z.B. auch **Frau** Maier oder Hr. **Meyer**, die auch erkannt werden sollen, in die (klangliche) Unterauswahl "Maier" fallen und klassifikationsrechtlich verwechselbar sind. Erst die nachfolgende Sprecher-Erkennung ergibt ein eindeutige Zuordnung. Das Beispiel 1 umschreibt also bei der Spracherkennung einen notwendigen Informationsbereich, um alle Nicht-"Maier", die nicht klanglich wie "Maier" klingen, vorab auszusondern.

Im Beispiel 2 müssen die Sprecher für die Identifikation ein personenspezifisches eindeutiges Codewort nennen, z.B. eine Zahlenfolge. Die vorgeschaltete Spracherkennung ergab eine Reduzierung des Identifikationsproblems auf n=1, d.h. es ist jetzt nur noch nötig, eine Verifikation durchzuführen, basierend auf einem hinreichenden Informationsgehalt, bei zuvor schon ausgewertetem notwendigen Informationsgehalt.

Obwohl im Stand der Technik Sprach- besser als Sprecher-Erkennungen gelöst sind, stößt eine reine Sprecher-Erkennung wegen beschränkter Rechenkapazität schnell an ihre Grenzen, da ein Lernmuster mit jeder Klasse verglichen werden muß (Beispiel: Bankkunden). Sowohl die FAR als auch die FRR sinken aber bei kleinerer Klassenanzahl. Z.B. wird bei einem System "Sesam" gemäß DE 44 13 788.5 (oder WO 95/25316) im reinen Identifikationsfall bei 66 Personen eine Gütefunktion (Gₛₑₛₐₘ=1-FRR+FAR) von unter 80% im akustischen Bereich erzielt, während eine Verifikation die Gütefunktion auf 97,2% erhöht.

Ein Beispiel 3 soll mit Einbindung einer Rückweisungsklasse erläutert werden. Bei der biometrischen Personenerkennung hat jede berechtigte Person eine Identifikationsklasse. Die Rückweisungsklasse wird über eine Auswahl eines großen Pools von Personendatensätzen gebildet. Neben den Identifikationsklassen stellt die Rückweisungsklasse den "Rest der Welt" dar, bildlich oft mit "im übrigen" umschrieben. Dadurch werden in der Regel unberechtigte Personen, die fälschlicherweise nicht abgewiesen wurden, in die Rückweisungsklasse eingeordnet und dadurch korrekt abgewiesen.

Bei z.B. 10 Aufnahmen (Muster) einer zu verifizierenden Person und einem Pool von 200 Aufnahmen (Muster) von einer repräsentativen Stichprobe der Bevölkerung werden die biometrischen Daten Mimik, Gesichtsbild und Akustik als Merkmale herangezogen. Weiterhin steht eine Teststichprobe von 20 Aufnahmen der zu verifizierenden Person und 100 Aufnahmen von unbekannten Personen zur Verfügung. In die Rückweisungsklasse werden die Aufnahmen aus "dem Pool" eingelernt, die zu einem optimalen Ergebnis auf der Teststichprobe führen, d.h. die Gütefunktion G wird maximiert. Es ist klar, daß bei diesem Zahlenbeispiel schnelle Auswahlverfahren verwendet werden, da das Erproben 2²⁰⁰ Testläufe erfordert.

Nicht berechtigte Personen konnten bislang nur über eine Rückweisungsschwelle abgewiesen werden; in Abhängigkeit dieser Schwelle ergibt sich aber eine hohe FAR oder FRR und damit ein kleiner Gütewert G.

Die Erfindung geht von der Vorgabe aus, die Güte einer Klassifikation in einer Identifikation weiter zu verbessern, sei es durch neue Klassifikatoren oder durch neue prinzipielle Ansätze des Klassifikationsansatzes. Vorgeschlagen wird dazu ein Verfahren zum Klassifizieren mit zwei Verfahrensschritten, bei dem der Informationsgehalt eines Musters (Objekt oder Person) in zwei Informationsbereichen ausgewertet wird, von denen der erste Bereich notwendige Informationen, der zweite Bereich hinreichende Informationen beinhaltet. Durch den notwendigen Informationsbereich wird eine noch unscharfe und mehrere, aber eine stark begrenzte Anzahl von Klassen betreffende Vorauswahl getroffen. Es erfolgt eine Identifikation mit dem hinreichenden Informationsbereich nach der Vorauswahl, um die noch unscharfe Vorauswahl hinsichtlich einer tatsächlichen Zielklasse zu konkretisieren.

## Patentansprüche

1. Verfahren zum Klassifizieren von Mustern, wie Objekte oder Personen, in Klassen, bei dem der Informationsgehalt eines zu klassifizierenden Musters aktiv in zwei Informationsbereiche eingeteilt wird, von denen der erste Bereich eine notwendige Information und der zweite Bereich eine hinreichende Information beinhaltet,
umfassend zwei Verfahrensschritte:
(a) durch den notwendigen Informationsbereich wird eine noch unscharfe, eine stark begrenzte Anzahl der Klassen betreffende Vorauswahl getroffen;
(b) nach der Vorauswahl erfolgt eine Identifikation mit dem hinreichenden Informationsbereich, um die noch unscharfe Vorauswahl hinsichtlich einer einzigen Zielklasse aus der begrenzten Anzahl der Klassen zu konkretisieren.

2. Verfahren nach Anspruch 1, bei dem eine Rückweisungsklasse (10) als mögliche Klasse zur Vorab-Zuordnung solcher Muster bereitsteht, die aufgrund von in der Rückweisungsklasse eingelerntem Vorab-Wissen mit zumindest guter Wahrscheinlichkeit zurückzuweisen sind.

3. Verfahren nach Anspruch 1, bei dem ein vorher bestehendes Wissen in einer Rückweisungsklasse (10) vor dem Beginn des zweiten Verfahrensschrittes eingelernt wird, orientiert an einem repräsentativen Querschnitt der nicht in die Klassen der positiv klassierenden Identifikation einzuordnenden Muster, insbesondere aufgrund von sicher abzuweisenden Mustern.

4. Verfahren nach einem der vorigen Ansprüche, bei dem die Rückweisungsklasse (10) jeweils zu den anderen Klassen des jeweiligen Verfahrensschrittes, insbesondere der Zielklasse des zweiten Verfahrensschrittes, gleichberechtigt ist.

5. Verfahren nach einem der obigen Ansprüche, bei dem für jeweils eine Teilmenge der Klassen der Identifikation eine jeweils individuelle Rückweisungsklasse erlernt oder vorab bestimmt wird.

6. Verfahren nach Anspruch 5, bei dem jeweils eine Teilmenge der unscharfe Bereich der Vorauswahl (20) ist, betreffend die Einschränkung der möglichen Klassen für die (folgende) Identifikation (40) in eine konkrete Zielklasse als Endklassifikation.

7. Verfahren nach einem obiger Ansprüche, bei dem mit der notwendigen Information die Klassifizierung auf ein noch nötiges Erkennungsproblem wesentlich geringeren Grades reduziert wird.

8. Verfahren nach Anspruch 7, bei dem die Identifikation eine Verifikation der unscharfen Vorauswahl ist, wobei nur der hinreichende Informationsbereich ausgewertet wird.

9. Verfahren nach einem obiger Ansprüche, bei dem eine erste Zahl von Mustern vorliegt, die in nicht vollständigem bzw. begrenztem Umfang in die Rückweisungsklasse eingelernt werden, daß sich eine andere Musterzahl ergibt, um ein optimiertes Ergebnis der von der ersten Musterzahl abweichenden Musterzahl zu erhalten, wobei sich in der ersten und anderen Musterzahl auch eine kleine Anzahl von nicht der Rückweisung zuzuordnenden Mustern befindet.

10. Vorrichtung mit einem Rechenwerk und einer Eingabeeinheit und einer Ausgabeeinheit, bei der das Rechenwerk so programmiert ist, um das Verfahren nach einem der obigen Verfahrensansprüche auszuführen.

11. Vorrichtung nach Anspruch 10, bei der eine Informations-Splittingeinrichtung (50) vorgesehen ist, die eine Trennung notwendiger und hinreichender Information vornimmt, um einen ersten Klassifikator (20) mit einem ersten Informationsbereich und einen Identifizierer (40) mit hinreichendem Informationsbereich zu versorgen, weiche beiden Bereiche jeweils geringer sind, als die Gesamtinformation des gerade zu klassifizierenden Musters (60).

12. Vorrichtung nach Anspruch 10, bei der neben der zumindest einen konkreten Zielklasse (40) eine Rückweisungsklasse (10) als Speicherbereich definiert ist, die funktionell der Zielklasse gleichwertig, aber vom Umfang her größer ist, um alle nicht in die mindestens eine Zielklasse aufzunehmenden Muster (60) aufzunehmen.

13. Vorrichtung nach Anspruch 10, bei der neben der zumindest einen konkreten Zielklasse (40) eine Rückweisungsklasse (10) als Speicherbereich definiert ist, die hierarchisch der Zielklasse gleichwertig, aber vom Umfang her größer ist, um alle nicht in die mindestens eine Zielklasse aufzunehmenden Muster (60) aufzunehmen.

## Claims

1. Process for classifying patterns, such as objects or people, into classes in which the information content of a pattern to be classified is actively divided into two information regions, of which the first region contains necessary information and the second region contains adequate information, comprising two process steps:
(a) a still unclear pre-selection relating to a severely limited number of classes is made by the necessary information region;
(b) after pre-selection, identification takes place using the adequate information region in order to put in concrete form the still unclear pre-selection with regard to a single target class from the limited number of classes.

2. Process according to claim 1, in which a rejection class (10) is available as a possible class for initial assignment of such patterns, which because of initial knowledge learned in the rejection class are to be rejected with at least good probability.

3. Process according to claim 1, in which previously existing knowledge in a rejection class (10) is learned before the start of the second process step, orientated to a representative cross-section of the patterns not to be ordered into the classes of positively classifying identification, in particular due to the patterns certainly to be rejected.

4. Process according to one of the previous claims, in which the rejection class (10) is equal in each case to the other classes of the particular process step, in particular the target class of the second process step.

5. Process according to one of the above claims, in which for in each case one subset of the classes of identification, an in each case individual rejection class is learned or initially determined.

6. Process according to claim 5, in which in each case a subset is the unclear region of pre-selection (20), relating to the restriction of the possible classes for (subsequent) identification (40) into a concrete target class as final classification.

7. Process according to one of the above claims, in which classification is reduced to a still necessary recognition problem of considerably lower degree by the necessary information.

8. Process according to claim 7, in which identification is verification of the unclear pre-selection, wherein only the adequate information region is evaluated.

9. Process according to one of the above claims, in which a first number of patterns exists, which are learned into the rejection class incompletely or to a limited extent, that a further pattern number is produced in order to obtain an optimised result of the pattern number which deviates from the first pattern number, wherein a small number of patterns not to be assigned to rejection is also found in the first and further pattern number.

10. Device having an arithmetic unit and an input unit and an output unit, in which the arithmetic unit is programmed so as to execute the process according to one of the above process claims.

11. Device according to claim 10, in which a information-splitting device (50) is provided, which carries out separation of necessary and adequate information in order to supply a first classifier (20) with a first information region and an identifier (40) with an adequate information region, which two regions are in each case less than the total information of the pattern (60) about to be classified.

12. Device according to claim 10, in which in addition to the at least one concrete target class (40), a rejection class (10) is defined as a memory area, which is functionally equivalent to the target class, but as regards capacity is greater in order to include all patterns (60) not to be included in the at least one target class.

13. Device according to claim 10, in which in addition to the at least one concrete target class (40), a rejection class (10) is defined as a memory area, which is equivalent to the target class in hierarchy, but as regards capacity is greater in order to include all patterns (60) not to be included in the at least one target class.

## Revendications

1. Procédé de classification de modèles, tels que des objets ou des personnes, dans lequel le contenu informationnel d'un modèle à classer est divisé activement en deux zones d'information, dont la première zone contient une information nécessaire et la deuxième zone contient une information suffisante, le procédé comportant deux étapes opératoires :
(a) une présélection encore floue concernant un nombre très limité de classes est effectuée par la zone d'information nécessaire ;
(b) après la présélection, une identification est effectuée par la zone d'information suffisante pour concrétiser la présélection encore floue relative à une seule classe cible parmi le nombre limité de classes.

2. Procédé selon la revendication 1, dans lequel on dispose d'une classe de rebut (10) comme classe possible pour le classement par anticipation de tels modèles qui doivent être rejetés au moins avec une bonne probabilité en raison de connaissances déjà acquises par la classe de rebut.

3. Procédé selon la revendication 1, dans lequel des connaissances déjà existantes sont acquises par une classe de rebut (10) avant le début de la deuxième étape opératoire, en se fondant sur un échantillon représentatif des modèles à ne pas classer dans les classes de l'identification à classement positif.

4. Procédé selon l'une des revendications précédentes, dans lequel la classe de rebut (10) a les mêmes droits que chacune des autres classes de l'étape opératoire respective, notamment de la classe cible de la deuxième étape opératoire.

5. Procédé selon l'une des revendications précédentes, dans lequel, pour chaque partie de l'ensemble des classes de l'identification, une classe de rebut individuelle est apprise ou définie à l'avance.

6. Procédé selon la revendication 5, dans lequel une quantité partielle est la zone floue de la présélection (20), en ce qui concerne la limitation des classes possibles pour l'identification (suivante) (40) à une classe cible concrète comme classification finale.

7. Procédé selon l'une des revendications précédentes, dans lequel, avec l'information nécessaire, la classification est réduite à un problème de reconnaissance encore nécessaire de degré sensiblement plus faible.

8. Procédé selon la revendication 7, dans lequel l'identification est une vérification de la présélection floue, seule la zone d'information suffisante étant exploitée.

9. Procédé selon l'une des revendications précédentes, dans lequel il existe un premier nombre de modèles qui sont appris par la classe de rebut en totalité ou de façon limitée de façon à avoir un autre nombre de modèles pour obtenir un résultat optimisé du nombre de modèles différent du premier nombre de modèles, un petit nombre de modèles à ne pas classer comme rebut se trouvant également dans le premier nombre de modèles et dans l'autre nombre de modèles.

10. Dispositif comportant une unité de calcul, une unité d'entrée et une unité d'édition, dans lequel l'unité de calcul est programmée de façon à mettre en oeuvre le procédé selon l'une des revendications de procédé précédentes.

11. Dispositif selon la revendication 10, dans lequel il est prévu un dispositif de découpage d'informations (50) qui effectue une séparation d'une information nécessaire et suffisante afin de fournir à un premier classificateur (20) une première zone d'information et à un identificateur (40) une zone d'information suffisante, les deux zones ayant chacune une taille inférieure à l'information totale du modèle qui doit juste être classé (60).

12. Dispositif selon la revendication 10, dans lequel, en plus d'une classe cible concrète (40), une classe de rebut (10) est définie comme zone de mémorisation, qui est fonctionnellement équivalente à la classe cible, mais qui a une taille plus grande afin de recevoir tous les modèles (60) qui ne sont pas reçus dans l'au moins une classe cible.

13. Dispositif selon la revendication 10, dans lequel, en plus d'une classe cible concrète (40), une classe de rebut (10) est définie comme zone de mémorisation, qui est hiérarchiquement équivalente à la classe cible, mais qui a une taille plus grande afin de recevoir tous les modèles (60) qui ne sont pas reçus dans l'au moins une classe cible.
